# EUROPÄISCHE PATENTANMELDUNG

(11) **EP 2 107 661 A2**
(43) Veröffentlichungstag der Anmeldung: **07.10.2009**
(21) Anmeldenummer: 09003153.5
(22) Anmeldetag: 05.03.2009
(51) Int. Cl.: H02G 15/013, G02B 6/44

(54) **Kabelmuffe**

(30) Priorität: 31.03.2008 DE 202008004436 U
(71) Anmelder: CCS Technology, Inc., Wilmington, DE 19803 (US)
(72) Erfinder: Knuth, Thomas, Dr., 10317 Berlin (DE); Lange, Uwe, 58313 Herdecke (DE); Meyer, Thomas, Dipl.-Ing., 12557 Berlin (DE)
(74) Vertreter: Sturm, Christoph

(57) **Zusammenfassung**

Die Erfindung betrifft eine Kabelmuffe zur strukturierten Ablage bzw. Handhabung von in Mikrokabeln bzw. Minikabeln geführten Datenleitern, insbesondere Lichtwellenleitern, mit einem Abdeckkörper (11) und mindestes einem Dichtungskörper (10), wobei der Abdeckkörper (11) und der oder jeder Dichtungskörper (10) einen Innenraum zur Ablage bzw. Handhabung der in den Mikrokabeln geführten Datenleiter umschließen, wobei der oder jeder Dichtungskörper (10) mindestens eine Kabeleinführung (12) aufweist, wobei über die oder jede Kabeleinführung (12) des jeweiligen Dichtungskörpers (10) jeweils mehrere Mikroducts bzw. Miniducts (13) in den Innenraum der Kabelmuffe einführbar sind, sodass über jeden Mikroducts bzw. Miniducts jeweils ein Mikrokabeln bzw. Minikabeln in den Innenraum der Kabelmuffe einführbar sind. Erfindungsgemäß sind solche Mikroducts bzw. Miniducts (13), die über eine gemeinsame Kabeleinführung (12) in den Innenraum der Kabelmuffe einführbar sind, von einer gemeinsamen Umhüllung (14) radial außen umschlossen, wobei zwischen der Umhüllung (14) und der Kabeleinführung (12) ein trichterartiges Element (16) positioniert ist, wobei ein Dichtelement (15) der Kabeleinführung (12) gegenüber dem trichterartigen Element (16) abdichtet, und wobei zur Abdichtung des trichterartigen Elements (16) gegenüber der Umhüllung (14) und zur Abdichtung der Umhüllung (14) gegenüber den Mikroducts bzw. Miniducts (13) eine aushärtende Dichtmasse (17) zwischen das trichterartige Element (16) und die Umhüllung (14) sowie zwischen die Umhüllung (14) und die Mikroducts bzw. Miniducts (13) einbringbar ist.

## Beschreibung

Die Erfindung betrifft eine Kabelmuffe nach dem Oberbegriff des Anspruchs 1.

Aus der DE 10 2005 014 069 A1 ist eine als Haubenmuffe ausgebildete Kabelmuffe mit einem Dichtungskörper und einem als Haubenkörper ausgebildeten Abdeckkörper bekannt, wobei der Dichtungskörper und der Abdeckkörper einen Innenraum der Kabelmuffe zur Ablage bzw. Handhabung von als Lichtwellenleiter ausgebildeten Datenleitern umschließen, die in Mikrokabeln bzw. Minikabeln geführt sind. Nach diesem Stand der Technik umfasst der Dichtungskörper der Kabelmuffe mehrere Kabeleinführungen, die fabrikseitig mit Mikroducts bzw. Miniducts vorbestückt bzw. vorkonfektioniert sind. Derartige Mikroducts bzw. Miniducts verfügen über einen derartigen Innendurchmesser, dass über jeden Mikroduct bzw. Miniduct vorzugsweise jeweils ein Mikrokabel bzw. Minikabel mit einem Außendurchmesser bis maximal in etwa 7 mm in den Innenraum der Kabelmuffe eingeführt werden kann.

Typischerweise werden hierbei bei aus der Praxis bekannten Kabelmuffen je Kabeleinführung mehrere Mikroducts bzw. Miniducts in den Innenraum der Kabelmuffe eingeführt, um dann über jeden Mikroduct bzw. Miniduct jeweils ein Mikrokabel bzw. Minikabel in den Innenraum der Kabelmuffe einzuführen. Hierbei bereitet die Abdichtung der Mikroducts bzw. Miniducts im Kabeleinführungsbereich Schwierigkeiten, sodass in axialer Richtung der Mikroducts bzw. Miniducts gesehen Feuchtigkeit und/oder Gas in den Innenraum der Kabelmuffe eindringen kann. Dies ist von Nachteil.

Der hier vorliegenden Erfindung liegt das Problem zu Grunde, eine neuartige Kabelmuffe zu schaffen.

Dieses Problem wird durch eine Kabelmuffe gemäß Anspruch 1 gelöst. Erfindungsgemäß sind solche Mikroducts bzw. Miniducts, die über eine gemeinsame Kabeleinführung in den Innenraum der Kabelmuffe einführbar sind, von einer gemeinsamen Umhüllung radial außen umschlossen, wobei zwischen der Umhüllung und der Kabeleinführung ein trichterartiges Element positioniert ist, wobei ein Dichtelement der Kabeleinführung gegenüber dem trichterartigen Element abdichtet, und wobei zur Abdichtung des trichterartigen Elements gegenüber der Umhüllung und zur Abdichtung der Umhüllung gegenüber den Mikroducts bzw. Miniducts eine aushärtende Dichtmasse zwischen das trichterartige Element und die Umhüllung sowie zwischen die Umhüllung und die Mikroducts bzw. Miniducts einbringbar ist.

Mit der hier vorliegenden Erfindung können Mikroducts bzw. Miniducts im Bereich von Kabeleinführungen effektiv abgedichtet werden, sodass verhindert werden kann, dass Flüssigkeit und/oder Gas in den Innenraum der Kabelmuffe gelangt.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, anhand der Zeichnung näher erläutert. In der Zeichnung zeigt:

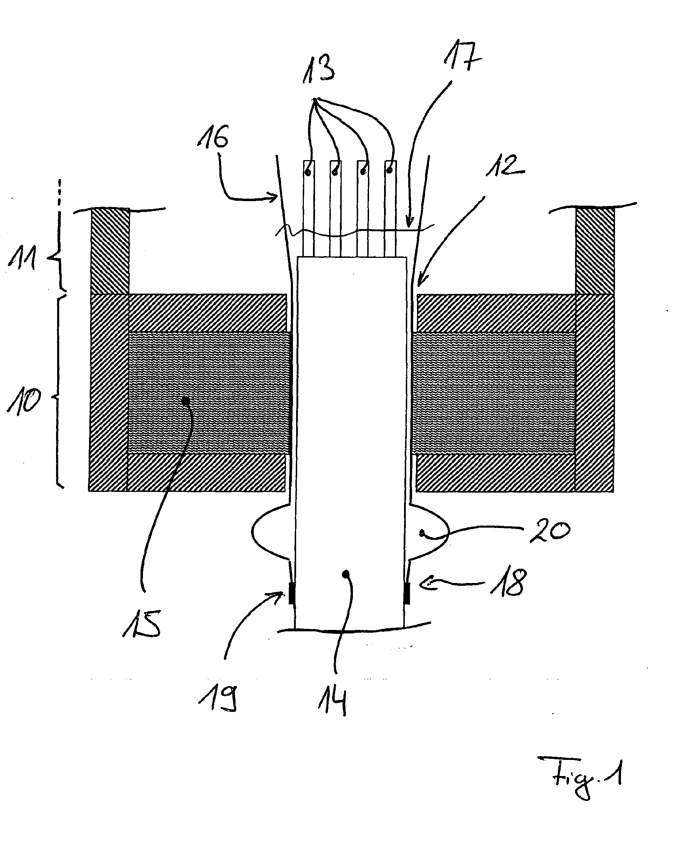

- Fig. 1:: einen schematisierten Ausschnitt aus einer erfindungsgemäßen Kabelmuffe.

Die hier vorliegende Erfindung betrifft eine Kabelmuffe zur strukturierten Ablage bzw. Handhabung von in Mikrokabeln bzw. in Minikabeln geführten Datenleitern, wobei die Datenleiter insbesondere als Lichtwellenleiter ausgeführt sind.

Fig. 1 zeigt einen schematisierten Ausschnitt aus einer erfindungsgemäßen Kabelmuffe im Bereich eines Dichtungskörpers 10 und eines Abdeckkörpers 11, wobei der Dichtungskörper 10 und der Abdeckkörper 11 einen Innenraum der Kabelmuffe definieren. Bei einer als Haubenmuffe ausgebildeten Kabelmuffe ist ein Dichtungskörper und bei einer als Inlinemuffe ausgebildeten Kabelmuffe sind zwei Dichtungskörper an gegenüberliegenden Seiten des Abdeckkörpers vorhanden.

Im gezeigten Ausführungsbeispiel der Fig. 1 umfasst der Dichtungskörper 10 eine Kabeleinführung 12, wobei über die Kabeleinführung 12 mehrere Mikroducts bzw. Miniducts 13 in den Innenraum der Kabelmuffe eingeführt sind. Über jeden Mikroduct bzw. Miniduct 13 ist vorzugsweise jeweils ein Mikrokabel bzw. Minikabel in die Kabelmuffe einführbar.

Gemäß Fig. 1 sind alle über die Kabeleinführung 12 in den Innenraum der Kabelmuffe eingeführten Mikroducts bzw. Miniducts 13 radial außen von einer gemeinsamen Umhüllung 14 umschlossen. Zwischen der Umhüllung 14 und der Kabeleinführung 12, nämlich einem der Kabeleinführung 12 zugeordneten Dichtelement 15, ist ein trichterförmiges Element 16 positioniert. Das Dichtelement 15 der Kabeleinführung 12 dichtet gegenüber dem trichterartigen Element 16 ab. Zur Abdichtung des trichterartigen Elements 16 gegenüber der Umhüllung 14 sowie zur Abdichtung der Umhüllung 14 gegenüber den in der Umhüllung 14 aufgenommenen Mikroducts bzw. Miniducts 13 und damit zur Abdichtung der Mikroducts bzw. Miniducts 13 gegeneinander ist zwischen das trichterartige Element 16 und die Umhüllung 14 sowie zwischen die Umhüllung 14 und die Mikroducts bzw. Miniducts 13 eine aushärtende Dichtmasse 17 einbringbar. Über diese Dichtmasse 17 können Hohlräume zwischen den Mikroducts bzw. Miniducts 13 sowie zwischen der Umhüllung 14 und dem trichterartigen Element 16 effektiv verschlossen werden, so dass über dieselben keine Flüssigkeit und kein Gas in den Innenraum der Kabelmuffe gelangen kann.

Bei der aushärtenden Dichtmasse 17 handelt es sich um eine Dichtmasse, die beim Einbringen einen flüssigen bzw. pastösen Zustand aufweist und anschließend in einen festen Zustand übergeht. So kann es sich bei der aushärtenden Dichtmasse 17 z. B. um einen Polyurethan-Schaum oder um ein Zwei-Komponenten-Gießharz handeln.

Wie Fig. 1 entnommen werden kann, ist das trichterartige Element 16 an einem Ende 18 an der Umhüllung 14 fixiert, nämlich über ein vorzugsweise als Schlauchschelle oder Schlauchbinder ausgebildetes Fixierelement 19. Das trichterartige Element 16 ist dabei im Bereich des Endes 18, an welchem dasselbe an der Umhüllung 14 fixiert ist und außerhalb des Innenraums der Kabelmuffe gegenüber dem Dichtungskörper 10 vorsteht, unter Bildung eines Reservoirs 20 für die Dichtmasse 17 ausgestellt. Hierdurch kann beim Einfüllen der Dichtmasse 17 von oben in das trichterförmige Element 16 überprüft werden, dass die aushärtende Dichtmasse 17 in den Hohlraum zwischen dem trichterartigen Element 16 und der Umhüllung 14 einfließt. Über das Fixierelement 19 wird ein Abfließen der Dichtmasse 17 aus dem Reservoir 20 entlang der Umhüllung 14 nach unten verhindert.

Mit der hier vorliegenden Erfindung wird demnach vorgeschlagen, Mikroducts bzw. Miniducts 13 in einer Kabeleinführung 12 eines Dichtkörpers 10 einer Kabelmuffe dadurch abzudichten, dass sämtliche Miniducts 13 von einer Umhüllung 14 radial außen umschlossen werden. Zwischen einem Dichtelement 15 der Kabeleinführung 12 und der Umhüllung 14 wird ein trichterartiges Element 16 positioniert, wobei das Dichtelement 15 der Kabeleinführung 12 gegen das trichterartige Element 16 abdichtet. Zwischen das trichterartige Element 16 und die Umhüllung 14 sowie zwischen die Umhüllung 14 und die Miniducts 13 wird eine aushärtende Dichtmasse 17 eingefüllt, um so sämtliche Hohlräume einerseits zwischen dem trichterartigen Element 16 und der Umhüllung 14 und andererseits zwischen der Umhüllung 14 und die Miniducts 13 zu verschließen, sodass keine Flüssigkeit und kein Gas in den Innenraum der Kabelmuffe eindringen kann.

### Bezugszeichenliste

- 10: Dichtungskörper
- 11: Abdeckkörper
- 12: Kabeleinführung
- 13: Miniduct
- 14: Umhüllung
- 15: Dichtelement
- 16: Element
- 17: Dichtmasse
- 18: Ende
- 19: Fixierelement
- 20: Reservoir

## Patentansprüche

1. Kabelmuffe zur strukturierten Ablage bzw. Handhabung von in Mikrokabeln bzw. Minikabeln geführten Datenleitern, insbesondere Lichtwellenleitern, mit einem Abdeckkörper (11) und mindestes einem Dichtungskörper (10), wobei der Abdeckkörper (11) und der oder jeder Dichtungskörper (10) einen Innenraum zur Ablage bzw. Handhabung der in den Mikrokabeln geführten Datenleiter umschließen, wobei der oder jeder Dichtungskörper (10) mindestens eine Kabeleinführung (12) aufweist, wobei über die oder jede Kabeleinführung (12) des jeweiligen Dichtungskörpers (10) jeweils mehrere Mikroducts bzw. Miniducts (13) in den Innenraum der Kabelmuffe einführbar sind, sodass über jeden Mikroduct bzw. Miniduct jeweils mindestens ein Mikrokabeln bzw. Minikabeln in den Innenraum der Kabelmuffe einführbar ist, **dadurch gekennzeichnet, dass:**
a) Mikroducts bzw. Miniducts (13), die über eine gemeinsame Kabeleinführung (12) in den Innenraum der Kabelmuffe einführbar sind, von einer gemeinsamen Umhüllung (14) radial außen umschlossen sind;
b) zwischen der Umhüllung (14) und der Kabeleinführung (12) ein trichterartiges Element (16) positioniert ist, wobei ein Dichtelement (15) der Kabeleinführung (12) gegenüber dem trichterartigen Element (16) abdichtet;
c) zur Abdichtung des trichterartigen Elements (16) gegenüber der Umhüllung (14) und zur Abdichtung der Umhüllung (14) gegenüber den Mikroducts bzw. Miniducts (13) eine aushärtende Dichtmasse (17) zwischen das trichterartige Element (16) und die Umhüllung (14) sowie zwischen die Umhüllung (14) und die Mikroducts bzw. Miniducts (13) einbringbar ist.

2. Kabelmuffe nach Anspruch 1, **dadurch gekennzeichnet, dass** die aushärtende Dichtmasse (17) ein Polyurethan-Schaum ist.

3. Kabelmuffe nach Anspruch 1, **dadurch gekennzeichnet, dass** die aushärtende Dichtmasse (17) ein Zwei-Komponenten-Gießharz ist.

4. Kabelmuffe nach einem der Ansprüche 1 bis 3, **dadurch gekennzeichnet, dass** das trichterartige Element (16) an einem Ende an der Umhüllung (14) fixiert ist.

5. Kabelmuffe nach Anspruch 4, **dadurch gekennzeichnet, dass** hierzu das trichterartige Element (16) an der Umhüllung (14) über eine Schlauchschelle oder einen Schlauchbinder fixiert ist.
